# EUROPEAN PATENT SPECIFICATION

(11) **EP 2 454 539 B1**
(45) Date of publication and mention of the grant of the patent: **08.11.2017**
(21) Application number: 10739675.6
(22) Date of filing: 09.07.2010
(51) Int. Cl.: F25B 27/00, F25D 11/00, F25D 16/00

(54) **REFRIGERATION APPARATUS**
KÄLTEGERÄT
APPAREIL DE RÉFRIGÉRATION

(30) Priority: 15.07.2009 GB 0912286; 15.09.2009 GB 0916160
(43) Date of publication of application: 23.05.2012
(73) Proprietor: The Sure Chill Company Limited, Cardiff CF14 7YT (GB)
(72) Inventor: TANSLEY, Ian, Tywyn Gwynedd LL36 9LW (GB)
(74) Representative: Boult Wade Tennant
(86) International application number: PCT/GB2010/051129
(87) International publication number: WO 2011/007162

(56) References cited:
- DE-A1- 4 142 842
- FR-A1- 2 562 218
- US-A- 4 321 802
- US-A1- 2002 104 318
- US-B1- 7 543 455

## Description

This invention relates to refrigeration apparatus. It has particular, but not exclusive, application to refrigeration apparatus for use in storage and transport of vaccines, food or other perishable items in the absence of a reliable supply of electricity. US 4,321,802 discloses a refrigerator according to the preamble of claim 1.

US 7,543,455 and DE 41 42 842 each discloses a refrigeration apparatus that can maintain a cooling effect in the event of interruption of a power supply. In US 7,543,455 there is described a solar-powered refrigerator. It uses a solar photovoltaic panel to convert solar energy to electricity to power a DC motor. The DC motor drives the compressor of a vapor-compression refrigeration system to freeze an energy-storage vessel, located in the freezer. The energy-storage vessel is filled with a mixture of glycerin, alcohol and water, with a freezing point of -12ºC to -23ºC (10ºF to -10ºF). In the absence of sunlight, the temperature of the frozen mixture can maintain near its freezing point for more than one day. The temperature of the refrigerator is maintained to a desirable value, for example 3ºC (37ºF), by a pair of heat-exchange coils and a thermostat, with or without sunlight. By contrast, in DE 41 42 842 there is described a cool container equipped with a thermoelectric heat pump, which on the heat side, and optionally also on the cold side, has a gravity operated cold medium circuit and on the cold side is provided with a thermic accumulator system. All of the components are integrated in a cover. The accumulator, on the other side of an insulating layer, is located on the underside of the cover, and with its dimensions is matched to the opening area of an underpart, into which it extends when the cover is closed. The cover, underpart and accumulator are either rectangularly or cylindrically formed.

FR 2,562,218 describes a refrigerator that is powered by photovoltaic energy and consists of a compartment for ice production and a compartment for storing perishable items. Each compartment has an evaporator immersed in a eutectic. The refrigerator enables the preservation of vaccines and the production of ice in isolated areas.

US 2002/104318 describes a miniature thermoelectric cooling device for storing small amounts of thermally unstable substances, like drug vials with insulin for diabetic patients or protein based drugs for thrombolytic therapy. A solar energy collector coupled with a rechargeable battery is provided as the energy source. The miniature cooler is small enough to be belt-carried at all time by a person, whose life or health depends on the drugs. When switched to a heating mode, the thermoelectric device can temporarily elevate the temperature of the drug to a body temperature thus providing comfortable conditions for the injection. A combined solar-and-battery power supply allows an article to be kept in the cooler at low temperatures around o'clock at all times during substantially long travels in hot or tropical conditions where even short term exposure to surrounding temperatures can destroy the potency of the drug.

One of the greatest problems facing the distributors of vaccines in underdeveloped countries is that their viability can be destroyed by storage at improper temperatures. In general, a vaccine must be stored between +2°C and +8°C. This is an especially difficult problem because, in many regions, this temperature must be maintained in the absence of a reliable (and potentially of any) supply of electricity to run a refrigerator, and this results in an unacceptably high proportion of all vaccines being ineffective by the time they reach their intended target. Similar problems arise with the storage of food in such circumstances.

It is natural that refrigerators that rely upon alternative sources of energy have been sought, and photovoltaic generation of electricity from sunlight has been seen as the most promising. A problem with any device that relies upon the sun as a source of energy is that the source is unavailable during night time. Conventionally, solar-powered refrigeration apparatus is provided with a rechargeable battery that is charged during daylight and which runs the apparatus at night. However, it is well known that the life of rechargeable batteries is diminished by exposure to high temperature. Failure of the battery can occur with little warning, meaning that the refrigerator can stop working resulting in spoiled contents. The life of the battery is typically much less than other components of a refrigerator: typically no more than five years for the battery, whereas the refrigerator as a whole may last twenty.

In view of these problems, the World Health Organisation (WHO) - the organisation that sets the standards for vaccine refrigerators - now encourages the use of batteryless solar refrigerators in the distribution chain for vaccines in future.

One approach to meeting this requirement is to include a cold reservoir within the refrigerator, separated from a payload space of the refrigerator by a thermal barrier. The cold reservoir is a thermal mass that is cooled to a low temperature (perhaps as low as -30°C) while solar power is available. When power becomes unavailable, the reservoir can absorb heat from the payload space. An important disadvantage of this arrangement is that it is difficult to maintain the temperature of the payload within the required temperature range. This type of apparatus presents a particular risk of overcooling vaccine: freezing can result in its immediate destruction. Freezing can also destroy or diminish the value of some food, such as fresh vegetables, or cause bottles that contain water to burst.

An aim of this invention is to provide refrigeration apparatus that can operate on solar power, yet which does not rely on batteries, and which minimises the risk to vaccines or other contents contained within it.

To this end, this invention provides a refrigerator having the features of claim 1.

As is well known, water has its maximum density at 4°C. Therefore, as water in the headspace is cooled towards 4°C, its density will increase, and it will therefore tend to sink towards the bottom of the reservoir. Since the payload container will adopt a temperature at or around that of the surrounding water, it will tend towards 4°C, which is an ideal temperature for storage of vaccines and many other items. The payload container is separated from the cooling means, so avoiding the risk of its contents (or of its walls) dropping towards freezing point.

The cooling means may include a refrigeration unit that can cool water within the headspace, and a power supply unit that can act as a source of power for the refrigeration unit. The power supply most typically includes means, such as photovoltaic cells, for converting sunlight into electrical power.

In typical embodiments, the refrigeration unit includes an electrically-powered compressor. However, refrigeration units using other refrigeration technology might be used to increase the electrical efficiency of the refrigerator. One example of such alternative technology is a Stirling cooler, which may be operated in solar direct drive mode.

To minimise the risk of the payload space being cooled to too low a temperature, a refrigerator having a refrigeration unit may further comprise a sensor disposed to detect the formation of ice in the reservoir. The sensor may be operative to cause operation of the refrigeration unit to be interrupted upon detection of the formation of ice.

In alternative embodiments of the invention, the cooling means includes a thermal mass that, for use, is at a temperature below a target temperature of the payload container. This can provide a refrigerator that is simple in construction and that has no moving parts in operation. For example, the thermal mass may be a body of water ice. Such an arrangement may be used on its own or in combination with a refrigeration unit. This combination within the cooling means can cool the refrigerator to its working temperature better or more quickly than can the refrigeration unit alone.

Such embodiments may include a compartment for receiving the thermal mass in thermal communication with water in the headspace. For example, the compartment may be suitable for receiving ice. Alternatively, the thermal mass may be immersed in water within the headspace. In this latter case, the thermal mass may be an ice pack.

The payload container is contained and submerged within the cooling region. This allows maximal heat transfer between the payload space and the water. Alternatively, the cooling region may be contained within a payload space. It may include one or more water-carrying passages that extend through the payload space, for example, in the form of a manifold. This arrangement may be simpler to construct, but the rate of heat transfer from the payload space to the water may be less.

The headspace is located, in use, directly above the payload container. In such embodiments, the payload container typically has an opening and a closure such as a door on one side of the payload container. Alternatively, the headspace may further be located, in use, to one side of the payload container. In such embodiments, the payload container typically has an opening and a closure such as a door on the top of the payload container.

In any event, a payload space within the payload container is in close thermal communication with the water in the reservoir. This ensures that the payload is maintained at a temperature approximately that of the water. The reservoir is insulated to minimise transfer of heat between water within the reservoir and surroundings of the refrigerator.

Embodiments of the invention may further include a freezer compartment. Typically, the freezer compartment is in close thermal communication with a cooling element of the refrigeration unit. This ensures that it is cooled to a significantly lower temperature than the water. The freezer compartment may have an opening that is closed by an insulated door. The insulated door may or may not also close the payload container.

An advantageous form of construction of embodiments of the invention may have an outer case within which is contained a water-containing liner. The liner may be formed of flexible plastic material. In these embodiments, the outer case typically provides structural strength and thermal insulation for the refrigerator.

Embodiments of the invention will now be described in detail, by way of example, and with reference to the accompanying drawings, in which:
Figure 1 is a graph of the density of water against temperature;
Figures 2 and 3 are front and side views of a front-loading refrigerator, being a first embodiment of the invention;
Figures 4 and 5 are front and side views of a top-loading refrigerator, being a second embodiment of the invention;
Figure 6 is a side view of a front-loading refrigerator and freezer, being a third embodiment of the invention;
Figure 7 is a side view of a top-loading refrigerator and freezer, being a fourth embodiment of the invention;
Figure 8 is a schematic section of a fifth embodiment of the invention; and
Figure 9 is a graph showing changes in temperature within a payload space;
Figures 10 and 11 are sectional views of a front-loading refrigerator being a sixth embodiment of the invention;
Figures 12 and 13 are sectional views of a top-loading refrigerator being a seventh embodiment of the invention;
Figure 14 is a sectional view of an eighth embodiment of the invention; and
Figures 15a to 15c are orthographic views of a watertight liner for use with an embodiment of the invention.

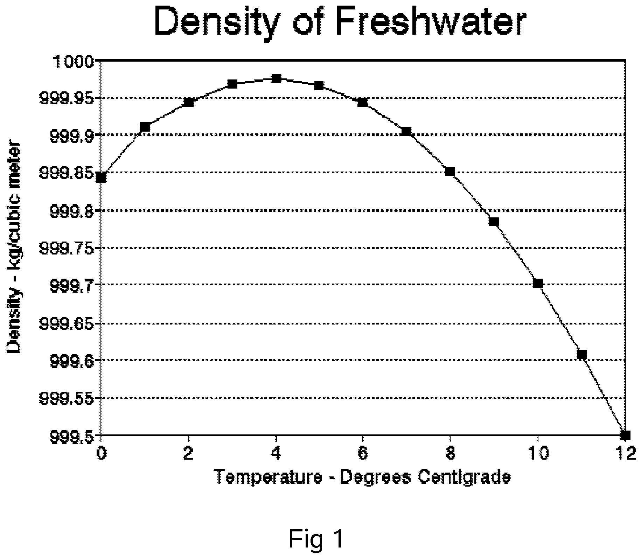

Operation of the present invention upon one of the well-known anomalous properties of water: namely, that its density is a maximum at approximately 4°C, as shown in Figure 1. This means that a tank of water that is cooled close to its top will form a temperature gradient, whereby the water towards the bottom of the tank will approach 4°C. The temperature at the bottom of the tank will not fall below this value unless the greater part of the water in the tank becomes frozen.

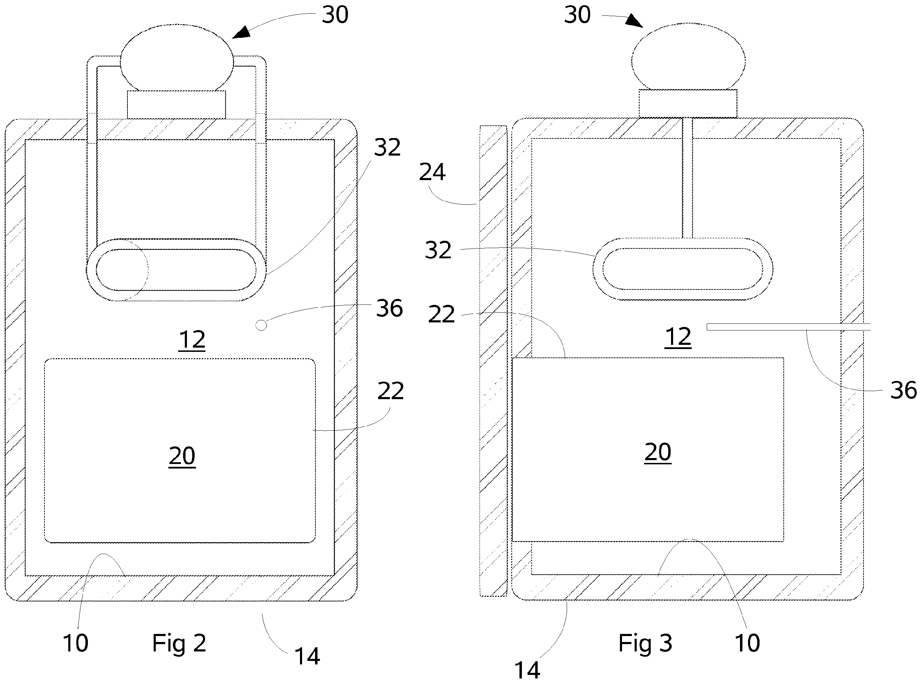

With reference to Figures 2 and 3, a refrigerator in accordance with a first embodiment of the invention will now be described.

The embodiment comprises a casing 10, which is, in this embodiment, shaped generally as an upright cuboid. The casing 10 is constructed to be a reservoir that, in use, contains a volume of water within an internal space 12. For instance, the casing 10 may be formed as a one-piece rotational moulding of plastic material. Insulating material 14 is carried on outer surfaces of the casing 10 to minimise flow of heat through the casing to or from the water contained within it. The water largely fills the internal space 12, but a small volume may be left unfilled to allow for expansion.

A payload space 20 is formed within the casing 10. The payload space 20 is located within a generally cuboidal box 22 that has one open face that opens horizontally to the exterior of the casing. The typical volume of the payload space may be in the range of 50 to 100 litres, but other arrangements, for specialist purposes, may have greater or lesser capacities. The other faces are located within the casing 10 and are submerged under the water that is contained within the casing 10. The submerged faces of the cuboidal box 22 have no insulation so that they are in thermal communication with the surrounding water in a cooling region of the reservoir. The box 22 may optionally be integrally formed with the casing 10. When the refrigerator is disposed for use, the payload space 20 extends from close to the lowermost surface of the internal space 12 of the casing to appropriately half way towards the uppermost surface of the internal space 12.

A door 24 is mounted on the casing 10. The door 24 can be opened to gain access to the payload space 20 through the open face. Insulating material is carried on the door 24 so that, when it is closed, it minimises the amount of heat that can be transferred through it into or out of the payload space 20.

A refrigeration unit 30 is carried on a top surface of the casing 10. In this embodiment, the refrigeration unit is a conventional electrical compressor-based cooling unit. The refrigeration unit 30 has a cooling element 32 that extends into the internal space 12 of the casing 10 and is submerged in the water. The cooling element 32 is located in a water-filled headspace above the box 22 such that it is spaced from the box 22 by a layer of water and likewise spaced from the uppermost surface of the internal space 12. (Alternatively, the refrigeration unit 30 may have a wrap-around evaporator that surrounds the headspace.) An optional ice probe 36 is located within the casing 10 above the box 22 but below the cooling element. The ice probe 36 is electrically connected to control the refrigeration unit 30, as will be described below.

The refrigerator has an external power supply to feed the refrigeration unit 30. The power supply can operate from a supply of mains voltage (derived from a power grid or from a local generator) in the absence of bright sunlight. The power supply can also operate from photovoltaic panels, whereby the refrigeration unit 30 can be run without the need of a mains supply during sunny daytime conditions.

Operation of the refrigerator will now be described.

When the refrigerator is first started, it can be assumed that all of the water is at or around the ambient temperature. The refrigeration unit 30 is run to cause its refrigeration element 32 to cool to a temperature that is typically well below the freezing point of water - for example, as low as -30°C. This, in turn, causes water in the immediate surroundings of the cooling element to cool. As the water cools, its density increases. This sets up an effect, whereby the cooled water sinks in the casing 10, so displacing warmer water below. This warmer water rises, and is, in turn, cooled. The average temperature of all of the water within the casing 10 falls. However, once the temperature of the water surrounding the cooling element 32 approaches 4°C, the rate of the effect decreases. This causes the lower part of the water to become comparatively stagnant, with a temperature of around 4°C. The water immediately surrounding the cooling element may fall below this, or may eventually freeze. However, the ice formed by this freezing will be less dense than the warmer water below, so the ice will float upwards. Ice may continue to form, and grow downwards as cooling continues. Once the growing ice reaches and is detected by the ice probe 36, power to the refrigeration unit 30 is cut, so no further ice will form. In this embodiment, there is still a clear layer of liquid water between the lowest part of the ice and the top of the box 22, whereby the box 22 and anything within the payload space will remain above the freezing point of water. However, the extent to which ice can be allowed to grow in any particular embodiment without potentially harming a payload can be determined by experimentation.

Once the refrigeration unit 30 stops, assuming that ambient temperature is higher than the temperature of the water, energy will pass through the walls of the casing 10 into the water, which will start to warm. In the reverse of the cooling process, water in the lower part of the casing 10 will tend to stay around 4°C while the ice melts. Following complete melting, the water will continue to warm, but water above 4°C will tend to rise to the top of the casing 10. Thus, the payload space 20 will be maintained at or around 4°C for as long as possible. As is well-known, a large amount of energy is required to melt ice - the latent heat of fusion. This acts as a sink of a large amount of energy that is absorbed by the water, the payload space being maintained at a substantially constant temperature during the time that the ice melts. The payload of the refrigerator is therefore maintained at around 4°C, which is an ideal temperature for storage of vaccine and of food and drink.

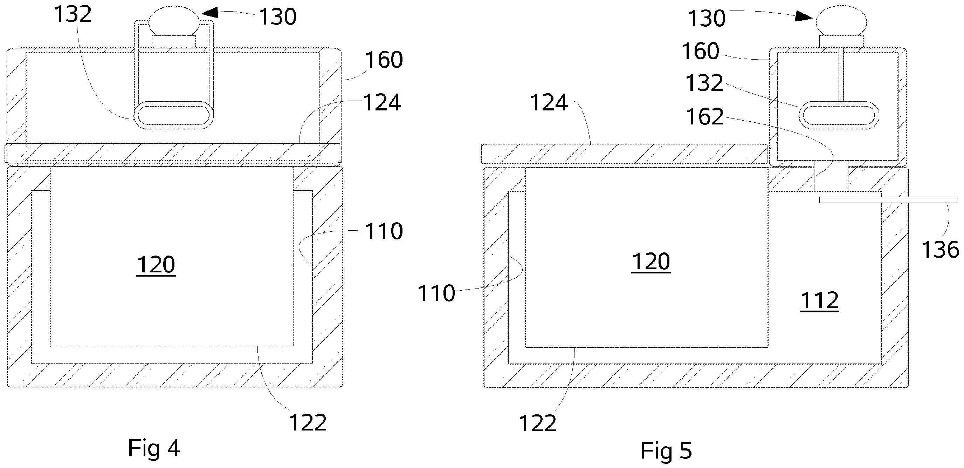

Figures 4 and 5 show a second embodiment of the invention: this has essentially the same components as the first embodiment. However, their layout is somewhat different. In the following description, components of the second embodiment will be given reference signs that are 100 greater than the corresponding components of the first embodiment.

In the second embodiment, the casing no is comparatively squatter in shape than that of the first embodiment. The opening of the box 122 faces upwards, and the door 124 opens upwards. Water surrounds the box on all sides but for the top opening, with the internal space 112 including an additional volume adjacent to one side of the box 122. A supplementary chamber 160, also containing water, is located on an upper surface of the box 122 above the additional headspace volume and adjacent to the door 124. A passage 162 interconnects the supplementary chamber 160 and the additional volume of the internal space 112 that allows water to pass between them. An ice sensor 136 is located adjacent to the passage 162 within the internal space 112.

A refrigeration unit 130 is carried on an upper surface of the supplementary chamber 160, with a cooling element 132 extending from it into the supplementary chamber 160.

This embodiment operates substantially as described above. Water that is cooled within the supplementary chamber passes into the internal space 112 through the passage 162. As before, the water that is densest - that is at round 4°C - sinks into the internal space 112 to cool the box 122 and the payload within it.

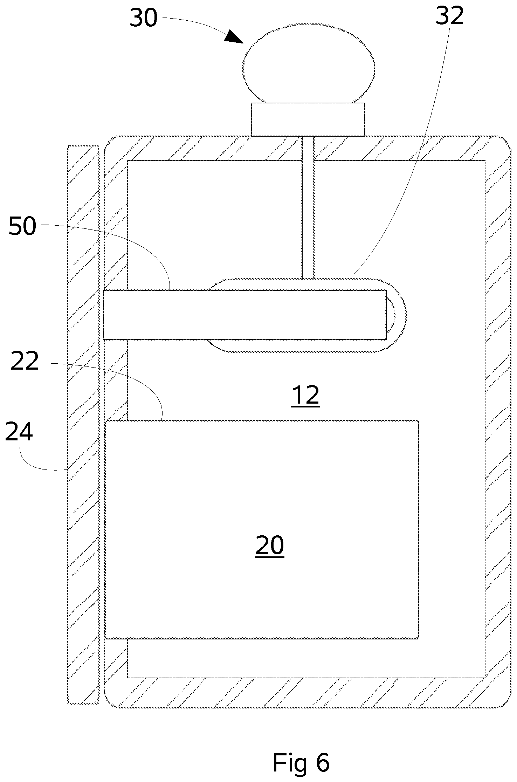

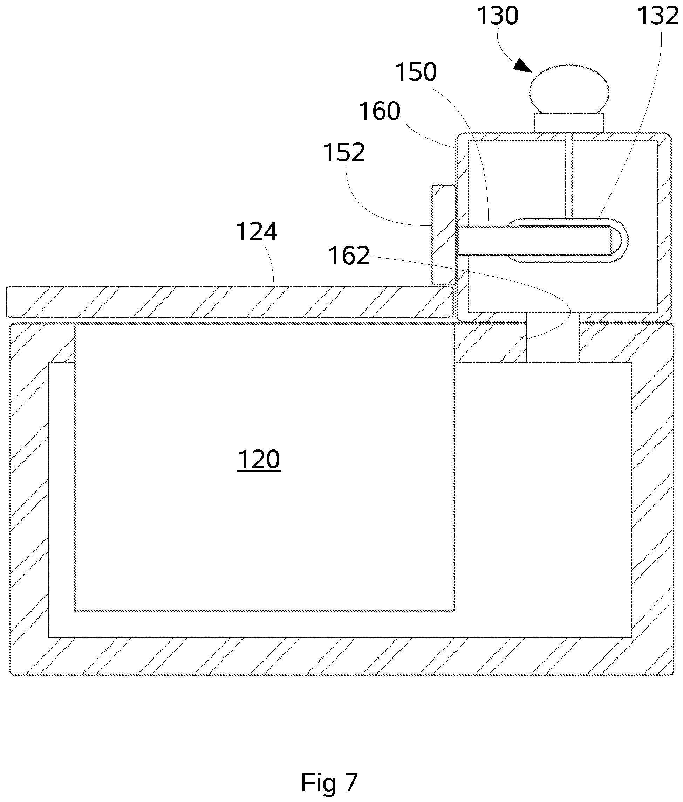

The third embodiment, shown in Figure 6 corresponds closely to the first embodiment of Figures 2 and 3, while the fourth embodiment of Figure 7 corresponds closely to the second embodiment of Figures 4 and 5. Therefore, only the additional features present will be described.

The third and fourth embodiments add the ability to maintain items in a frozen condition to the first and second embodiments. The freezer compartment is in close thermal contact with a cooling element, such that it is cooled to a temperature well below that of the water. In the third embodiment, a freezer compartment 50 is provided, that has similar construction to the payload space 22, and similarly has a horizontal opening that is closed by the door 24. The freezer compartment 50 is located directly above the payload space, in close proximity to, or surrounded by, the cooling element 32 of the refrigeration unit 30.

In the fourth embodiment, the opening of the freezer compartment 150 is horizontal and above that of the payload space 120. In the fourth embodiment, the opening of the freezer compartment 150 is horizontal and beside that of the payload space 120. The freezer compartment 150 is enclosed within the supplementary chamber 160, in close proximity to, or surrounded by, the cooling element 132 of the refrigeration unit 130. In this embodiment, the freezer compartment 150 has an insulated door 152 that is separate from the door 124 of the payload space 120. The door 152 closes a horizontal opening of the freezer compartment 150.

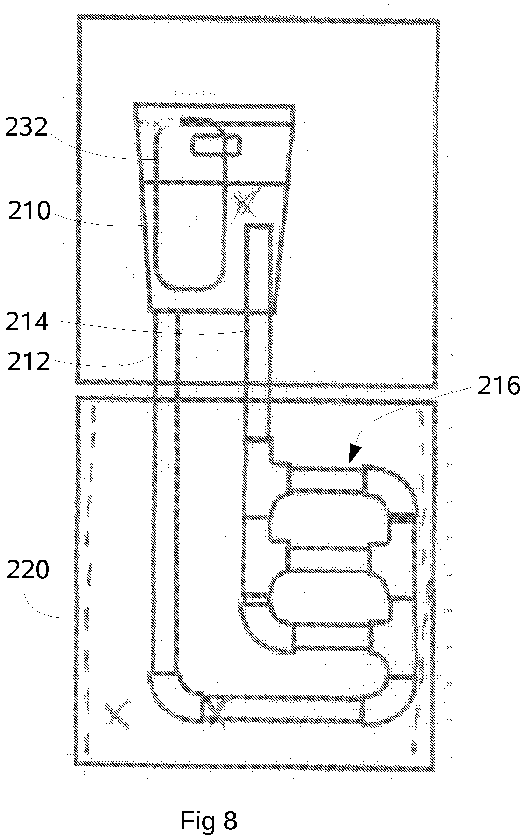

A fifth embodiment, shown in Figure 8, has a somewhat different construction from the previous embodiments, but operates on the same principles.

In this embodiment, the reservoir comprises an upper compartment 210 mounted above a payload container 220 to form a headspace. The reservoir includes first and second water ducts 212, 214 that extend generally downwards, when in use, into the payload container 220. The first duct 214 opens into the headspace at or close to a lowermost wall, while the second duct 214 extends upwards into water contained within the headspace. Within the payload container 220, a manifold of several pipes 216 are connected to flow in parallel between the two ducts 212, 214. A refrigeration unit is provided with cooling elements 232 that can cool water within the headspace.

As with the preceding embodiments, the densest water will tend to flow towards the bottom of the reservoir - in this case, into the ducts 212, 214 and manifold 216 within the payload container 220, where heat can be exchanged between the water within the reservoir and the contents of the payload container 220. A thermosiphon process becomes established that transfers heat away from the payload container into the headspace as the temperature of the payload container falls towards 4°C.

In yet further embodiments, there may be several payload containers within the reservoir to allow items that are to be carried to be kept separate.

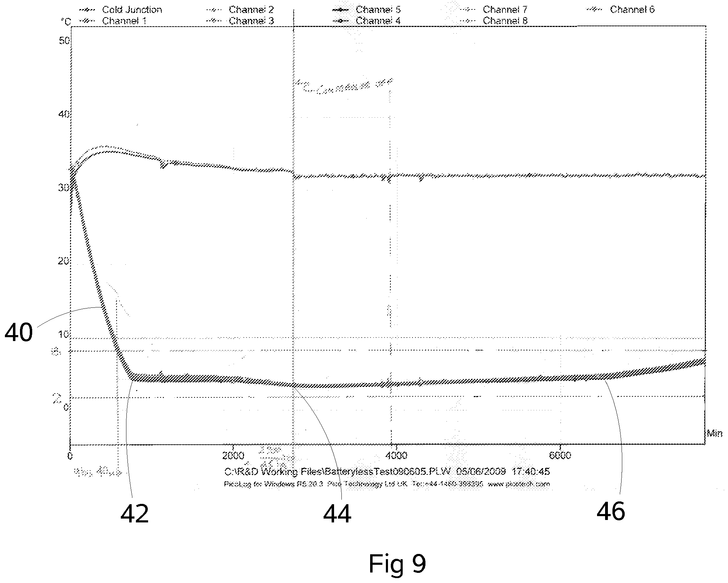

As shown in Figure 9, when the refrigeration unit 30, 130 is first turned on (at o on the X-axis), the temperature in the payload space 20, 120 (as shown by the trace 40) drops quickly to 4°C, when the temperature stabilises (at 42). The temperature does not drop substantially, notwithstanding that refrigeration unit 30 continues to run. At 44, the refrigeration unit stops. The temperature in the payload space 20 then rises only very slowly for a considerable amount of time before starting to rise more rapidly. In the example shown in Figure 9, the refrigeration unit runs for 9 hours and 40 minutes before the payload space reaches the maximum tolerable value of 8°C. Approximately an hour later, the temperature has dropped to 4°C. The refrigeration unit 30, 130 is then run for a further 34 hours approximately, without the temperature dropping significantly. Once the refrigeration unit 30, 130 is stopped, roughly 58 hours passes without a substantial rise in temperature. Then the temperature does start to rise, but over 16 hours passes before the maximum permissible 8°C is reached.

This performance is substantially beyond that required by the World Health Organisation for vaccine storage, and is ideally suited for use with a power supply that relies upon energy derived from sunlight. It is significantly more than adequate to maintain the contents at the required temperature overnight, and, should it be necessary, through a period of cloudy weather when the supply of electrical power is limited. It should be noted that this level of performance is reached without any backup source of power such as a rechargeable battery.

The above description assumes that the maximum density of water occurs at 4°C, which is the case for pure water. The temperature at which the maximum density occurs can be altered by introduction of impurities into the water. For example, if salt is added to the water to a concentration of 3.5% (approximately that of sea water) then the maximum density occurs at nearer 2°C. This can be used to adjust the temperature of the payload space for specific applications.

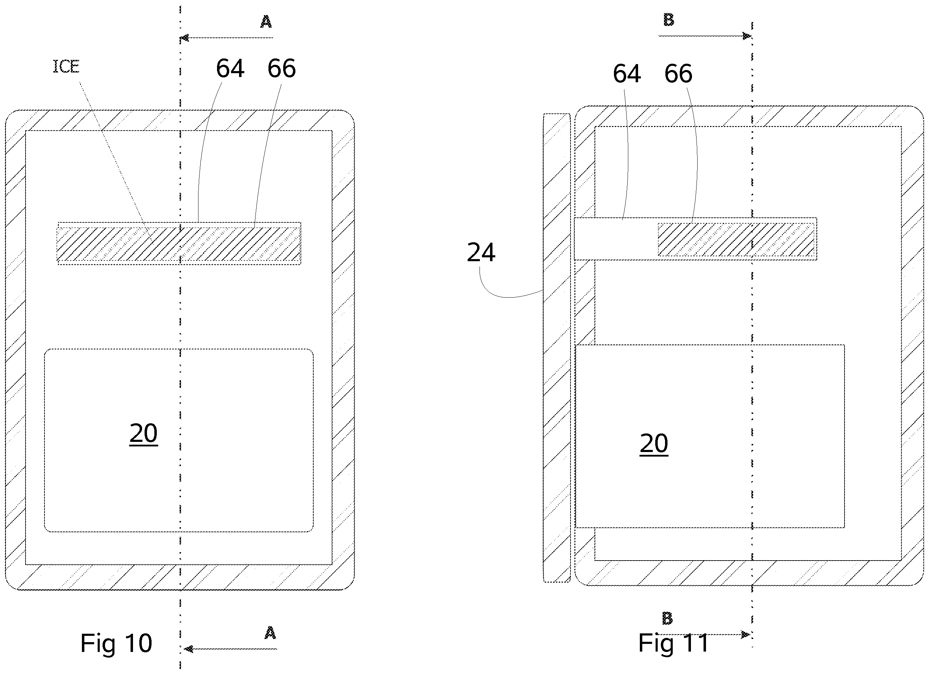

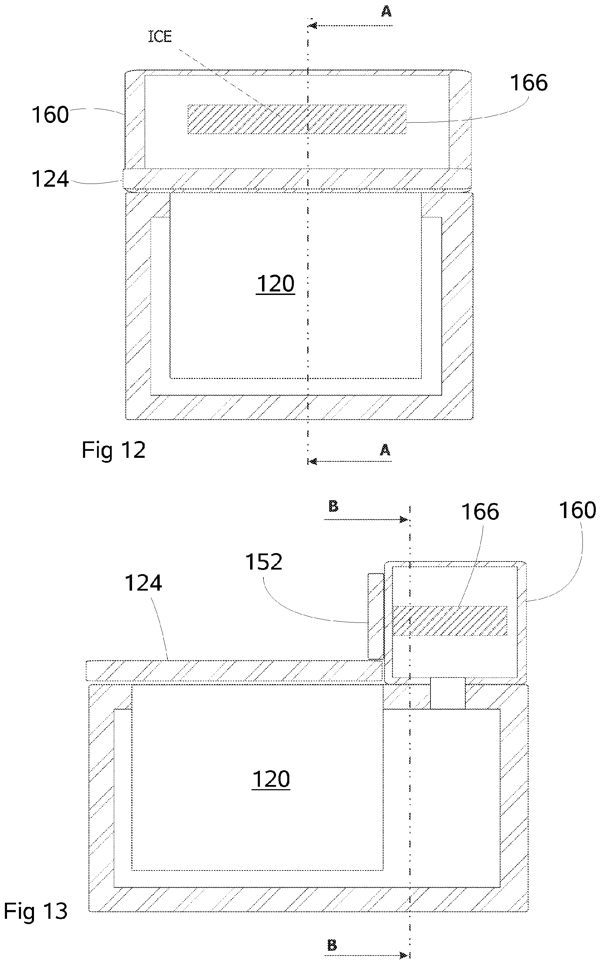

Further, simpler alternative embodiments of the invention are shown in Figures 10 to 13. The embodiment of Figures 10 and 11 is similar to the third embodiment, and the embodiment of Figures 11 and 12 is similar to the fourth embodiment. In each case, the refrigeration unit 30, 310 and the associated cooling element 32, 132 is omitted. Consequentially, no source of electrical power is required.

Instead, in the embodiment of Figures 10 and 11, a watertight compartment 64 is provided. The compartment 64 extends into the headspace at substantially the same location as the freezer compartment 50, 150 of the earlier embodiments. Access to a space within the compartment 64 can be reached from an opening that is closed by a door 24, 152 in much the same way as the freezer compartments 50, 150. The material of the compartment 64 is chosen to have a high thermal conductivity to ensure efficient heat transfer between contents of the compartment 64 and water surrounding it.

For use, the compartment 64 is filled with a body of cold material 66, 166. The body of cold material 66, 166 is at a temperature that is below the intended operating temperature of the payload space 20, 120. It will typically be well below 0°C. A temperature of around -18°C can be obtained by placing the body in a conventional food freezer before use, and -30°C or less would emulate the effect of a refrigeration unit. In a manner similar to transfer of heat from the water to the cooling element 32, 132 of preceding embodiments, heat is absorbed by the body of cold material from the water through the material of the compartment 64. In this way, the payload space 20, 120 is cooled by dense water cooled to approximately 4°C (or to another temperature at which the water and any of its additives is at its densest).

The body of cold material can be anything with a suitable thermal mass. However, water ice is particularly suitable because it is readily available and has an advantageously high latent heat of fusion. The ice may be in the form of standard 0.6 litre ice packs 166 that are used in transport and storage of medical supplies. If ice packs are to be used, the compartment could be omitted altogether, with the ice packs being placed directly within the water of the headspace, as shown in Figures 12 and 13. (Of course, the embodiment of Figures 12 and 13 could be modified to include a compartment as in the embodiment of Figures 10 and 11, and the embodiment of Figures 10 and 11 could be modified by the omission of the compartment.)

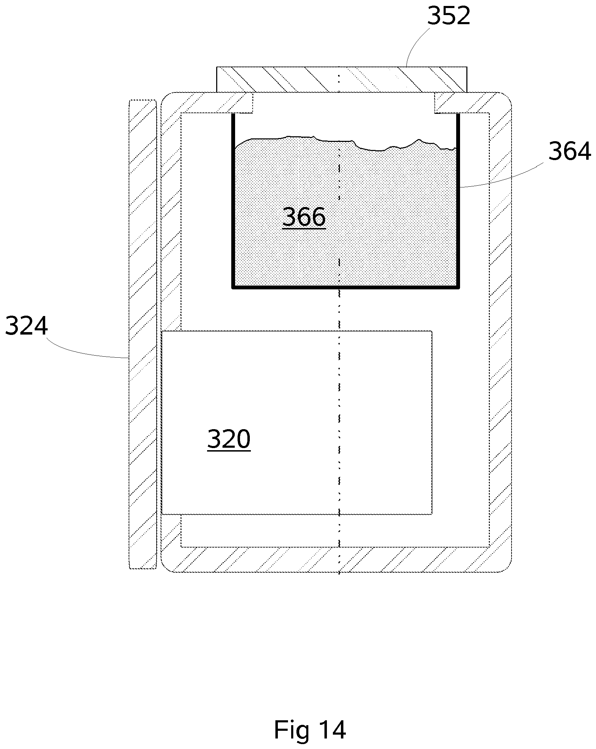

Another embodiment that makes use of a thermal mass is shown in Figure 14. In this embodiment, a container 364 is located above the payload container 320 submerged in water within the headspace. The container 364 is formed of a material that allows heat to be transferred from water within the headspace to its contents. The container 364 has an opening through which its interior can be reached from outside of the refrigerator, the opening being closed by a thermally-insulated cover 352. In this embodiment, the opening of the container faces upward when the refrigerator is in use.

This embodiment functions in a manner similar to those described above that make use of a thermal mass. Cold material 366, most typically water ice, is introduced into the container 364 through the opening. Heat then moves from water in the headspace to the ice within the container, thereby cooling the water and the contents of the payload container 320, in accordance with the principles described above. The arrangement of the opening shown in Figure 14 allows the ice to be introduced quickly and easily into the container.

It is surmised that a refrigerator with a payload space of 60 litres can be maintained within a required temperature range for between 7 and 30 days, with a requirement of 100 litres of ice to achieve the upper end of this range.

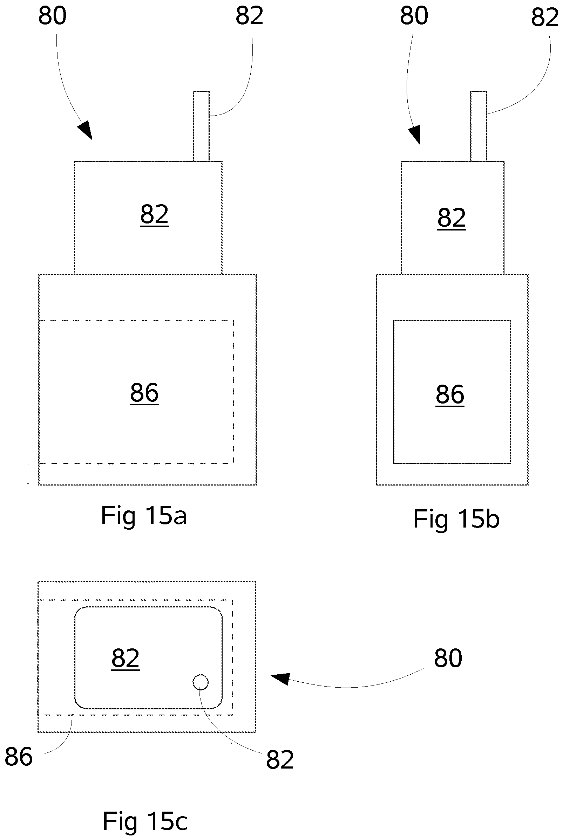

Clearly, in all of the above examples, a central requirement is that the water be maintained within the refrigerator in a manner that leakage and evaporation is prevented. This can be quite difficult to achieve for a refrigerator that is likely to be subject to rough handling and shock as it is transported in rugged vehicles on poorly-surfaced roads or entirely off-road. Therefore, one system for constructing a refrigerator embodying the invention is to provide a rigid outer case that provides the overall shape, structural strength and thermal insulation, and to line the case with a watertight liner 80 formed from flexible plastic material. Such a liner is shown in Figure 15a to 15c.

It will be understood that the liner 80 will be shaped and dimensioned in accordance with the particular requirements with which it will be used, and that the figures illustrate just one exemplary configuration. The example shown in Figures 15a to 15c will be suitable for use in a front-entry refrigerator. It includes a headspace 82, a filling pipe 84, and a recess 86 within which the payload space is contained. The weight of the water causes the material of the liner 80 to deflect, so as to conform closely to the payload space, thereby ensuring effective heat transfer between the payload space and water within the liner 80. Small deflections of or damage to the outer case will not result in leakage of the liner 80. In the event that the liner does leak, it can be replaced readily and at little cost.

## Claims

1. A refrigerator having:
a) cooling means;
b) a payload container (22, 122), a payload space (20) located within a payload container (22, 122) and within which items can be placed for temperature-controlled storage; and
c) a casing (10, 110) constructed to be a reservoir (12, 112) within which water is contained in use, insulating material (14) being carried on outer surfaces of the casing (10, 110) and the reservoir (12, 112) having:
i) a cooling region in thermal communication with the payload container (22, 122), the payload container (22, 122) having one open face that opens to the exterior of the casing (10, 110), the other faces being located within the casing (10, 110) and except one of them being submerged,
in use, under the water contained within the casing (10, 110), the submerged faces having no insulation so that they are in thermal communication with the surrounding water in the cooling region of the reservoir (12, 112); and
ii) a headspace,
**characterized in that** all said other faces are submerged and belong to said submerged faces, and **in that** said headspace, in use, contains water and is disposed above the payload container (22, 122) and the cooling region and is in fluid communication therewith, the headspace being configured to permit said cooling means (32, 132; 66, 166) to be disposed therein for cooling water within the headspace.

2. A refrigerator according to claim 1, wherein the cooling means (32, 132; 66, 166) comprises a thermal mass (66, 166) that, in use, is at a temperature below a target temperature of the payload container (12, 122), the thermal mass (66, 166) optionally being an ice pack or a body of water ice.

3. A refrigerator according to claim 1, wherein the cooling means (32, 132; 66, 166) comprises a refrigeration unit (30, 130).

4. A refrigerator according to claim 3 comprising a power supply for the refrigeration unit (30, 130), the power supply comprising one of:
a mains voltage power source; and
means for converting sunlight into electrical power, for example a plurality of photovoltaic cells.

5. A refrigerator according to claim 3 or 4, wherein the refrigeration unit (30, 130) includes one of:
an electrically-powered compressor; and
a Stirling cooler being optionally operable in solar direct drive mode.

6. A refrigerator according to any of claims 3 to 5 comprising a sensor (36, 136) for detecting the formation of ice in the reservoir (12, 112), the sensor (36, 136) being operable to cause operation of the refrigeration unit (30, 130) to be interrupted upon detection of the formation of ice.

7. A refrigerator according to claim 2 comprising a compartment (64) for receiving the thermal mass (66).

8. A refrigerator according to any preceding claim comprising one or more water-carrying passages (212, 214, 216) that extend through a payload space.

9. A refrigerator according to any preceding claim in which the payload container (22, 122) includes an opening and a closure (24, 124) located, in use:
on one side of the payload container (22); or
on top of the payload container (122).

10. A refrigerator according to claim 9 in which the closure (24, 124) is an insulated door carried on the reservoir (12, 112).

11. A refrigerator according to any preceding claim that further includes a freezer compartment (50, 150) that is, in use, in close thermal communication with the cooling means (32, 132; 66, 166).

12. A refrigerator according to claim 11 in which the freezer compartment (50, 150) has an opening that is closed by an insulated door (24, 152), the insulated door (24) optionally also closing the payload container (22).

13. A refrigerator according to any preceding claim, wherein the casing (10, 110) comprises an outer case within which is contained a liquid-containing liner (80), optionally formed of flexible plastic material.

14. A refrigerator according to claim 13 in which the outer case provides structural strength and thermal insulation for the refrigerator.

## Patentansprüche

1. Kühlschrank, Folgendes aufweisend:
a) ein Kühlmittel;
b) einen Nutzlastbehälter (22, 122), einen Nutzlastraum (20), der in einem Nutzlastbehälter (22, 122) angeordnet ist und innerhalb von dem Artikel zur temperaturkontrollierten Lagerung platziert werden können; und
c) ein Gehäuse (10, 110), das als ein Reservoir (12, 112) gestaltet ist, in dessen Inneren in Gebrauch Wasser enthalten ist, wobei Isoliermaterial (14) auf den Außenflächen des Gehäuses (10, 110) aufliegt, und das Reservoir (12, 112) Folgendes aufweist:
i) eine Kühlregion in wärmeleitender Verbindung mit dem Nutzlastbehälter (22, 122), wobei der Nutzlastbehälter (22, 122) eine offene Fläche aufweist, die sich hin zum Äußeren des Gehäuses (10, 110) öffnet, wobei die anderen Flächen innerhalb des Gehäuses (10, 110) angeordnet sind und mit der Ausnahme, dass eine von ihnen bei Gebrauch in das in dem Gehäuse (10, 110) enthaltene Wasser eintaucht, wobei die Tauchflächen ohne Isolierung sind, so dass sie sich in wärmeleitender Verbindung mit dem umgebenden Wasser in den Kühlbereich des Reservoirs (12, 112) befinden; und
ii) einen Kopfraum, **dadurch gekennzeichnet, dass** alle anderen Flächen eingetaucht sind und zu den Tauchflächen gehören, und dadurch, dass der Kopfraum bei Gebrauch Wasser enthält und oberhalb des Nutzlastbehälters (22, 122), und der Kühlregion angeordnet ist und in fluidleitender Verbindung damit steht, wobei der Kopfraum gestaltet ist, dass sich das Kühlmittel (32, 132; 66, 166) darin zum Kühlen von Wasser innerhalb des Kopfraums anordnen lässt.

2. Kühlschrank nach Anspruch 1, wobei das Kühlmittel (32, 132; 66, 166) eine thermische Masse (66, 166) aufweisen, die sich in Gebrauch bei einer Temperatur unterhalb einer Zieltemperatur des Nutzlastbehälters (12, 122) befindet, wobei die thermische Masse (66, 166) gegebenenfalls ein Eispack oder ein Eiswasser-Körper ist.

3. Kühlschrank nach Anspruch 1, wobei das Kühlmittel (32, 132; 66, 166) ein Kühlaggregat (30, 130) aufweist.

4. Kühlschrank nach Anspruch 3, aufweisend eine Spannungsquelle für das Kühlaggregat (30, 130), wobei die Spannungsquelle eines von Folgendem aufweist:
eine Hauptspannungsenergiequelle; und
Mittel zum Umwandeln von Sonnenlicht in elektrische Energie, beispielsweise eine Vielzahl von photovoltaischen Zellen.

5. Kühlschrank nach Anspruch 3 oder 4, wobei das Kühlaggregat (30, 130) eines von Folgendem aufweist:
einen elektrisch betriebenen Kompressor; und
einen Stirlingkühler, der gegebenenfalls direkt solarbetrieben ist.

6. Kühlschrank nach einem der Ansprüche 3 bis 5, aufweisend einen Sensor (36, 136) zum Nachweis der Bildung von Eis in dem Reservoir (12, 112), wobei der Sensor (36, 136) betreibbar ist, um den Betrieb des Kühlaggregats (30, 130) mit Unterbrechung beim Nachweis der Bildung von Eis zu bewirken.

7. Kühlschrank nach Anspruch 2, umfassend ein Abteil (64) zur Aufnahme der Thermomasse (66).

8. Kühlschrank nach einem vorangehenden Anspruch, aufweisend einen oder mehrere wasserführende Kanäle (212, 214, 216), die sich durch einen Nutzlastraum erstrecken.

9. Kühlschrank nach einem vorangehenden Anspruch, wobei der Nutzlastbehälter (22, 122) eine Öffnung und einen Verschluss (24, 124) aufweist, der bei Gebrauch folgendermaßen angeordnet ist:
auf einer Seite des Nutzlastbehälters (22), oder
oben auf dem Nutzlastbehälter (122).

10. Kühlschrank nach Anspruch 9, wobei der Verschluss (24, 124) eine isolierte Türe ist, die auf dem Reservoir (12, 112) liegt.

11. Kühlschrank nach einem vorangehenden Anspruch, der weiterhin ein Gefrierabteil (50, 150) aufweist, das bei Gebrauch in engem wärmeleitenden Austausch mit dem Kühlmittel (32, 132; 66, 166) steht.

12. Kühlschrank nach Anspruch 11, wobei das Gefrierabteil (50, 150) eine Öffnung aufweist, die durch eine isolierte Tür (24, 152) geschlossen wird, wobei die isolierte Tür (24) gegebenenfalls auch den Nutzlastbehälter (22) verschließt.

13. Kühlschrank nach einem vorangehenden Anspruch, wobei das Gehäuse (10, 110) ein Außengehäuse aufweist, in dessen Inneren eine flüssigkeitsenthaltende Auskleidung (80) enthalten ist, die gegebenenfalls aus flexiblem Kunststoffmaterial gebildet ist.

14. Kühlschrank nach Anspruch 13, wobei das Außengehäuse Strukturfestigkeit und Wärmeisolierung für den Kühlschrank bereitstellt.

## Revendications

1. Réfrigérateur ayant :
a) des moyens de refroidissement ;
b) un conteneur de charge utile (22, 122), un espace de charge utile (20) situé dans le conteneur de charge utile (22, 122) et à l'intérieur duquel des articles peuvent être placés pour un stockage à température commandée ; et
c) un boîtier (10, 110) construit pour être un réservoir (12, 112) dans lequel de l'eau est contenue en utilisation, un matériau isolant (14) étant supporté sur des surfaces extérieures du boîtier (10, 110), et le réservoir (12, 112) ayant :
i) une zone de refroidissement en communication thermique avec le conteneur de charge utile (22, 122), le conteneur de charge utile (22, 122) ayant une face ouverte qui s'ouvre vers l'extérieur du boîtier (10, 110), les autres faces étant situées à l'intérieur du boîtier (10, 110) et, à l'exception de l'une d'entre elle étant immergée, en utilisation, sous l'eau contenue dans le boîtier (10, 110), les faces immergées n'ayant pas d'isolation de sorte qu'elles sont en communication thermique avec l'eau environnante dans la zone de refroidissement du réservoir (12, 112) ; et
ii) un espace de tête,
**caractérisé en ce que** toutes lesdites autres faces sont immergées et appartiennent auxdites faces immergées et **en ce que** ledit espace de tête, en utilisation, contient de l'eau et est disposé au-dessus du conteneur de charge utile (22, 122) et de la zone de refroidissement, et est en communication de fluide avec ceux-ci, l'espace de tête étant configuré pour permettre auxdits moyens de refroidissement (32, 132 ; 66, 166) d'être disposés pour refroidir l'eau dans l'espace de tête.

2. Réfrigérateur selon la revendication 1, dans lequel les moyens de refroidissement (32, 132 ; 66, 166) comprennent une masse thermique (66, 166) qui, en utilisation, est à une température inférieure à une température cible du conteneur de charge utile (12, 122), la masse thermique (66, 166) étant éventuellement un bloc de glace ou un corps de glace d'eau.

3. Réfrigérateur selon la revendication 1, dans lequel les moyens de refroidissement (32, 132 ; 66, 166) comprennent une unité de réfrigération (30, 130).

4. Réfrigérateur selon la revendication 3, comprenant une alimentation électrique pour l'unité de réfrigération (30, 130), l'alimentation comprenant un parmi :
une source d'alimentation en tension de secteur ; et
des moyens pour convertir la lumière du soleil en énergie électrique, par exemple une pluralité de cellules photovoltaïques.

5. Réfrigérateur selon la revendication 3 ou 4, dans lequel l'unité de réfrigération (30, 130) comprend un parmi :
un compresseur électrique ; et
un refroidisseur Stirling pouvant facultativement être actionné en mode d'entraînement solaire direct.

6. Réfrigérateur selon l'une quelconque des revendications 3 à 5 comprenant un capteur (36, 136) pour détecter la formation de glace dans le réservoir (12, 112), le capteur (36, 136) pouvant fonctionner pour amener le fonctionnement de l'unité de réfrigération (30, 130) à être interrompu à la détection de la formation de glace.

7. Réfrigérateur selon la revendication 2, comprenant un compartiment (64) pour recevoir la masse thermique (66).

8. Réfrigérateur selon l'une quelconque des revendications précédentes, comprenant un ou plusieurs passages transporteurs d'eau (212, 214, 216) qui s'étendent à travers un espace de charge utile.

9. Réfrigérateur selon l'une quelconque des revendications précédentes, dans lequel le conteneur de charge utile (22, 122) comprend une ouverture et une fermeture (24, 124) située, en utilisation :
sur un côté du conteneur de charge utile (22) ; ou
sur le dessus du conteneur de charge utile (122).

10. Réfrigérateur selon la revendication 9, dans lequel la fermeture (24, 124) est une porte isolée supportée sur le réservoir (12, 112).

11. Réfrigérateur selon l'une quelconque des revendications précédentes, qui comprend en outre un compartiment de congélateur (50, 150) qui, en utilisation, est en communication thermique étroite avec les moyens de refroidissement (32, 132 ; 66, 166).

12. Réfrigérateur selon la revendication 11, dans lequel le compartiment de congélateur (50, 150) présente une ouverture qui est fermée par une porte isolée (24, 152), la porte isolée (24) fermant également facultativement le conteneur de charge utile (22).

13. Réfrigérateur selon l'une quelconque des revendications précédentes, dans lequel le boîtier (10, 110) comprend un boîtier extérieur dans lequel est contenu une doublure contenant un liquide (80), éventuellement formée d'une matière plastique souple.

14. Réfrigérateur selon la revendication 13, dans lequel le boîtier extérieur fournit une résistance structurelle et une isolation thermique pour le réfrigérateur.
